(19) Europäisches Patentamt
European Patent Office
Office européen des brevets

(11) **EP 4 124 926 A1**

(12) **EUROPEAN PATENT APPLICATION**

(43) Date of publication:
01.02.2023 Bulletin 2023/05

(51) International Patent Classification (IPC):
*G05F 1/00* *(2006.01)*

(21) Application number: 22165030.2

(22) Date of filing: 29.03.2022

(52) Cooperative Patent Classification (CPC):
**G05B 19/0423;** G01S 7/497

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 30.07.2021 CN 202110871948

(71) Applicant: **Nio Technology (Anhui) Co., Ltd Hefei City, Anhui 230601 (CN)**

(72) Inventors:
• LAI, Ziyang
**Hefei City, Anhui, 230601 (CN)**
• GAO, Xianglong
**Hefei City, Anhui, 230601 (CN)**

(74) Representative: **Vossius & Partner Patentanwälte Rechtsanwälte mbB Siebertstraße 3 81675 München (DE)**

(54) **CONTROL APPARATUS AND METHOD FOR ELECTRONIC DEVICE, MOBILE EQUIPMENT, AND STORAGE MEDIUM**

(57) The invention includes a control apparatus and method for an electronic device, a mobile equipment, and a storage medium. The control apparatus for an electronic device includes: a sampling portion configured to obtain working data of the electronic device; a processing portion including a digital-to-analog conversion unit and configured to generate, based on the working data, a control signal for controlling the electronic device; and a driving portion configured to output, based on the control signal, power for driving the electronic device.

**100**

*FIG. 1*

**Description**

**Technical Field**

The invention relates to the technical field of vehicle control. Specifically, the invention relates to a control apparatus and method for an electronic device, a mobile equipment, and a storage medium.

**Background Art**

In electronic circuits, there are many electronic devices that operate at varying working currents. In such a case, an electronic device may be damaged if the working current of the electronic device undesirably exceeds a certain maximum working limit (e.g., a maximum working current, a maximum working voltage, etc.) of the electronic device due to some reasons. Additionally, there may be a need to control parameters, such as the working current of the electronic device, such that the electronic device works in a desired state.

A sensing device belongs to the electronic device of the above type because one or more parameters in the sensing device generally change with external environmental parameters, thereby enabling measurement of the external environmental parameters. With the development of intelligence, various sensing devices are gradually applied to increasingly miniaturized tools or equipments. However, in existing transport means (e.g., a mobile transportation means) or various mobile devices (e.g., an AI robot), circuits dedicated to implementing control over electronic devices are generally not self-contained due to design and cost constraints such as an available volume and an inherent circuit arrangement.

**Summary of the Invention**

According to an aspect of the invention, a control apparatus for an electronic device is provided, the apparatus including: a sampling portion configured to obtain working data of the electronic device; a processing portion including a digital-to-analog conversion unit and configured to generate, based on the working data, a control signal for controlling the electronic device; and a driving portion configured to output, based on the control signal, power for driving the electronic device.

As an alternative or addition to the above solution, the control apparatus for an electronic device according to an embodiment of the invention further includes a conversion portion, which is configured to convert the working data from a current form to a voltage form.

As an alternative or addition to the above solution, the control apparatus for an electronic device according to an embodiment of the invention further includes a control portion, which is configured to control the state of the electronic device based on the working data.

As an alternative or addition to the above solution, in the control apparatus for an electronic device according to an embodiment of the invention, the control portion is further configured to: compare a working value represented by the working data with a reference threshold represented by reference data, and make the electronic device in a stop state when the working value exceeds the reference threshold, or make the electronic device in a working state when the working value does not exceed the reference threshold.

As an alternative or addition to the above solution, in the control apparatus for an electronic device according to an embodiment of the invention, the control portion further includes a metal-oxide semiconductor field-effect transistor (MOSFET) as an on-off unit.

As an alternative or addition to the above solution, in the control apparatus for an electronic device according to an embodiment of the invention, the electronic device is positioned on a transport means or a mobile device.

According to another aspect of the invention, a control method for an electronic device is provided, the method including: a sampling step: obtaining working data of the electronic device; a processing step: generating, based on the working data, a control signal for controlling the electronic device, and including a digital-to-analog conversion sub-step; and a driving step: outputting, based on the control signal, power for driving the electronic device.

As an alternative or addition to the above solution, the control method for an electronic device according to an embodiment of the invention further includes a conversion step: converting the working data from a current form to a voltage form.

As an alternative or addition to the above solution, the control method for an electronic device according to an embodiment of the invention further includes a control step: controlling the state of the electronic device based on the working data.

As an alternative or addition to the above solution, in the control method for an electronic device according to an embodiment of the invention, the control step further includes: comparing a working value represented by the working data with a reference threshold represented by reference data, and making the electronic device in a stop state when the working value exceeds the reference threshold, or making the electronic device in a working state when the working value does not exceed the reference threshold.

As an alternative or addition to the above solution, in the control method for an electronic device according to an embodiment of the invention, the control step further includes performing an on/off sub-step using an MOSFET.

As an alternative or addition to the above solution, in the control method for an electronic device according to an embodiment of the invention, the electronic device is positioned on a transport means or a mobile device.

According to still another aspect of the invention, there is provided a computer-readable storage medium having stored thereon program instructions executable by a processor, where when the program instructions are executed by the processor, the control method for an electronic device according to any embodiment of an aspect of the invention is performed.

According to yet another aspect of the invention, there is provided a mobile equipment, which includes the control apparatus for an electronic device according to any embodiment of an aspect of the invention.

The current control apparatus and method and the like for an electronic device according to one or more embodiments of the invention can implement functions of accurately controlling the working current of the electronic device, performing current-limiting protection on the electronic device, etc.

**Brief Description of the Drawings**

The above-mentioned and/or other aspects and advantages of the invention will become more apparent and more readily appreciated from the following description of various aspects in conjunction with the accompanying drawings, in which the same or similar units are denoted by the same reference numerals. In the drawings:

FIG. 1 is a schematic block diagram of a control apparatus 100 for an electronic device according to an embodiment of the invention;

FIG. 2 is an example of a detailed circuit diagram of the control apparatus 100 for an electronic device according to an embodiment of the invention; and

FIG. 3 is a schematic block diagram of a control method 200 for an electronic device according to an embodiment of the invention.

**Detailed Description of Embodiments**

In this specification, the invention is described more fully with reference to the accompanying drawings in which schematic embodiments of the invention are illustrated. However, the invention may be implemented in different forms, and should not be construed as being limited to the embodiments provided herein. The embodiments provided herein are intended to make the disclosure of this specification full and complete, to convey the scope of protection of the invention more fully to those skilled in the art.

The terms such as "include" and "comprise" are used to indicate that in addition to the units and steps that are directly and clearly described in the specification and the claims, other units and steps that are not directly or clearly described are not excluded in the technical solutions of the invention. The terms such as "first" and "second" are not used to indicate sequences of units in terms of time, space, size, etc., and are merely used to distinguish between the units.

The invention is described below with reference to the flowchart descriptions, the block diagram and/or the flowchart of the method and system according to the embodiments of the invention. It should be understood that these flowchart descriptions and/or each block in the block diagram, and combinations of the flowchart descriptions and/or the block diagram, can be implemented by computer program instructions. These computer program instructions may be provided to a processor of a general-purpose computer, a dedicated computer, or other programmable data processing devices to constitute a machine, so that the instructions executed by the processor of the computer or the other programmable data processing devices create components for implementing the functions/operations specified in these flowcharts and/or blocks and/or one or more flow block diagrams. It should also be noted that in some alternative implementations, the functions/operations shown in the blocks may not occur in the order shown in the flowchart. For example, two blocks shown in sequence may actually be executed substantially simultaneously or the blocks may sometimes be executed in a reverse order, depending on the functions/operations involved.

Various embodiments provided in the disclosure may be implemented by hardware, software, or a combination of hardware and software where applicable. In addition, without departing from the scope of the disclosure, various hardware components and/or software components described in this specification may be combined into a combined component including software, hardware, and/or both where applicable. Without departing from the scope of the disclosure, various hardware components and/or software components described in this specification may be separated into sub-components including software, hardware, or both where applicable. In addition, where applicable, it is contemplated that software components may be implemented as hardware components, and vice versa.

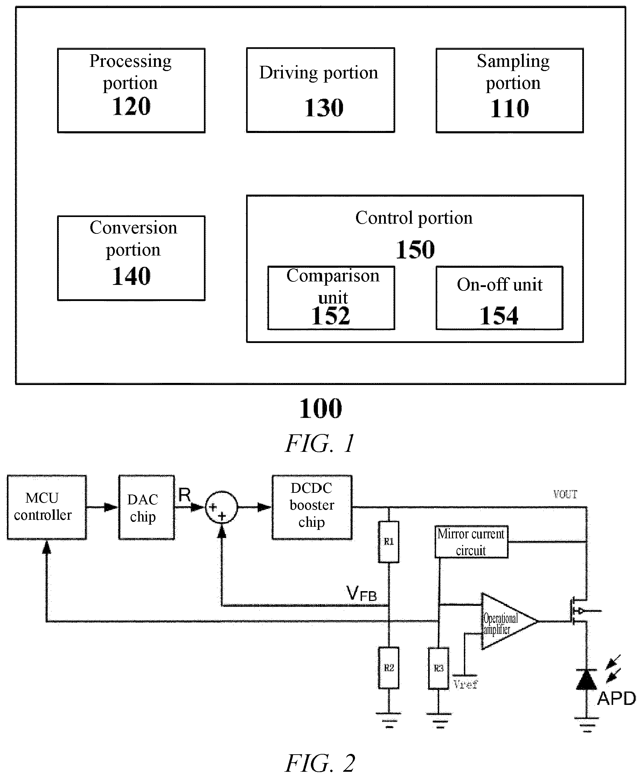

Referring now to FIG. 1, FIG. 1 is a schematic block diagram of a control apparatus 100 for an electronic device according to an embodiment of the invention. The electronic device may be an electronic device having working parameters that need to be adjusted so as to enable a related circuit part to generate the most desired data. For example, the related circuit part may be a sensor circuit, in which one or more electronic devices may be adjusted to work at a specific voltage or current, to achieve a desired sensing accuracy, a desired sensing range, a desired sensing sensitivity, etc. While an example of the electronic device is given, it is to be understood that any electronic device capable of achieving effects in the technical solution of the invention shall be within the application scope of the invention.

In the embodiment of FIG. 1, the control apparatus 100 may include a sampling portion 110, a processing portion 120, and a driving portion 130. The sampling portion 110 may be configured to obtain working data of the electronic device, such as working voltage data and working current data. In an embodiment where the current data is sampled, the sampling portion 110 may include a mirror current circuit. In an embodiment where the voltage data is sampled, the sampling portion 110 may include a sampling resistor. The processing portion 120 may include a digital-to-analog conversion (DAC) unit, and may be configured to generate, based on the working data, a control signal for controlling the electronic device. The driving portion 130 may be configured to output, based on the control signal, power for driving the electronic device, such as a voltage and a current.

In conventional designs, for transport means such as vehicles, or other miniaturized mobile equipments, self-contained booster chips (e.g., automotive grade DC-DC booster chips), rather than automotive grade APD power supply chips, are used as the driving portion 130 to provide desired power for devices, without providing an over-current or over-voltage protection function. The conventional driving portion 130 may output corresponding power in response to a digital signal generated by a control unit (e.g., a micro control unit (MCU), an electronic control unit (ECU), etc.) in the processing portion 120. Due to an inherent attribute of the digital signal, the accuracy thereof is often limited, for example, an output thereof is generally a specific number of signals having a specific level. In a case of a 3-bit data output, signals such as 0 to 7 may be output, which may be represented, in binary, as 000, 001, 010, 011, 100, 101, 110, and 111, respectively. In turn, a value of a power signal generated by the driving portion 130 in response to the digital signal generated by the control unit may only have a corresponding specific number of values, so that the control accuracy is relatively low.

Incorporating the DAC into the processing portion 120 makes it possible to control, by the control unit, the DAC to output an analog linear voltage, and to further make the range of an output of the downstream driving portion 130 wider, accuracy higher, and an adjusting speed higher, thereby facilitating a test on a working voltage of each electronic device and improving working efficiency, so as to position the working state of the electronic device closer to a desired optimal point.

In another embodiment, the apparatus 100 may further include a conversion portion 140, which may be configured to convert the working data from a current form to a voltage form. In some scenarios, it is more advantageous to convert current data into voltage data. For example, when the working current of the electronic device is small, direct use of sampled current data for subsequent processing such as feedback, comparison, addition, and subtraction may easily lead to a large relative error, which reduces the overall accuracy of a circuit. In this case, the voltage data having a reasonable value may be obtained by means of conversion of the current data by the conversion portion 140 including an element such as a resistor, thereby facilitating subsequent operations. A value of the resistor used as the conversion portion 140 may be adjusted as appropriate, so that the generated sampling voltage is within a desired range.

In another embodiment, the apparatus 100 may further include a control portion 150, which may be configured to control the state of the electronic device based on the working data. The state of the electronic device may include a working state and a stop state, such as a state of not being connected to an active power source or a state of being separate from the overall circuit. The control portion 150 may further be configured to compare a working value represented by the working data with a reference threshold represented by reference data, and to make the electronic device in a stop state when the working value exceeds the reference threshold, or to make the electronic device in a working state when the working value does not exceed the reference threshold. For example, when the working value exceeds the reference threshold, the control portion 150 may maintain the electronic device in the stop state if the electronic device is already in the stop state, and the control portion 150 may switch the electronic device from the working state to the stop state if the electronic device is in the working state.

In an embodiment, the control portion 150 may include an operational amplifier as a comparison unit 152, where the working data (e.g., representing the value of a sampled working voltage) is input from a first input terminal thereof, and the reference data (e.g., representing the reference threshold) is input from a second input terminal thereof. The reference threshold may be set as needed. For example, the reference threshold may be a product of a maximum current value of when the device may work normally and a resistance value of the resistor as the conversion portion 140. For example, the reference threshold may be set slightly less than the above product, thereby leaving a certain safety margin for protecting the device against damage. In an embodiment, the first input terminal is an inverting input terminal, and the second input terminal is a non-inverting input terminal. Therefore, the comparison unit 152 outputs a low level when the value of the sampled working voltage is greater than the reference threshold, and the comparison unit 152 outputs a high level when the value of the sampled working voltage is less than the reference threshold.

Additionally, the control portion may further include an on-off unit, and the on-off unit is a device such as a metal-oxide semiconductor field-effect transistor (MOSFET), and a bipolar junction transistor (BJT). In a case where the MOSFET is used, the loss of a circuit having same may be made correspondingly small due to a small ON impedance of the MOSFET; and the complexity of the circuit may also be reduced due to simple control logic of the MOSFET. In a case where an N-channel type field-effect transistor is used, a gate electrode thereof may be connected to an output of the comparison unit 152. Therefore, when the comparison unit 152 outputs a low level, that is, the value of the sampled working voltage is greater than the reference threshold, the field-effect transistor as an on-off unit 154 is turned off to stop supplying driving power to the electronic device, and vice versa. In this way, excessive current or voltage supply can be cut off in a timely manner when the working current of the electronic device may cause damage to the electronic device, so as to achieve the purpose of protecting the electronic device.

It is to be understood that while the exemplary embodiments of the comparison unit 152 and the on-off unit 154 in the control portion 150 are given above, the elements in the control portion 150 may be replaced by other elements where applicable, and are connected in such a manner that may be changed accordingly. For example, the sampled working voltage data may be connected to the non-inverting input terminal of the comparison unit 152, and the reference voltage data may be connected to the inverting input terminal of the comparison unit 152. Accordingly, the N-channel type field-effect transistor may be replaced with a P-channel type field-effect transistor to achieve the purpose of the invention.

Over-current or over-voltage protection of the electronic device may be implemented by the sampling portion 110, the conversion portion 140, and the control portion 150 as described above, and relatively accurate control of the power for driving the electronic device may be implemented by the sampling portion 110, the conversion portion 140, the DAC, and original components of the circuit (e.g., an automotive grade controller and an automotive grade booster circuit). In an embodiment, the electronic device is positioned on a transport means or a mobile device. In this case, multiplexing of the sampling portion 110 and the conversion portion 140 may be implemented by appropriately connecting the sampling portion 110 and the conversion portion 140 in the circuit, thereby reducing the occupation of a circuit board space in the transport means or the mobile device. Additionally, the use of the example components above, for example, as the sampling portion 110, the conversion portion 140, the control portion 150, etc. may further reduce the occupation of the circuit board space. Moreover, the addition of the DAC unit, instead of introducing a full set of circuit for accurately controlling an output voltage, may reduce modifications to an inherent conventional circuit layout, thereby facilitating manufacturing and further saving the circuit board space.

Next, referring to FIG. 2, an example of a detailed circuit diagram of the control apparatus 100 for an electronic device according to an embodiment of the invention is given.

In the embodiment of FIG. 2, the processing portion 120 includes an MCU controller and a DAC chip, an example of the driving portion 130 is a DC-DC booster chip, an example of the sampling portion 110 is a mirror current circuit, an example of the conversion portion 140 is a resistor R3, an example of the comparison unit 152 in the control portion 150 is an operational amplifier, and an example of the on-off unit 154 is an N-channel field-effect transistor. In this embodiment, an example of the electronic device is an avalanche photo diode (APD) in a vehicle-mounted laser radar.

In vehicles having functions such as advanced driving assistance and autonomous driving, a laser radar may be used as a sensor to sense lighting intensity in an environment. An important device of a receiving circuit that senses environmental lighting is an APD. Due to changes in sensing scenarios and sensing requirements, or due to differences in manufacturing processes, a driving voltage (i.e., a reverse working voltage) of the APD needs to be set appropriately so that the APD works at a desired photoelectric detection sensitivity, accuracy, sensing range, etc. For example, in a nighttime environment, high-sensitivity sensing may be required, while in the daytime when lighting conditions are better, the sensitivity, accuracy, sensing range, etc. of sensing may be appropriately reduced where safety is ensured, so as to achieve effects of solving the energy consumption problem, etc. In addition, the APD works at a reverse voltage and a current therein changes as the intensity of received light changes. Therefore, there is a need to limit the working voltage of the APD, that is, performing current-limiting protection, to prevent the APD from being broken down and thus damaged due to high-intensity lighting that undesirably occurs.

In the embodiment of FIG. 2, the working current of the APD is collected by the mirror current circuit. The working current is converted into a working voltage signal by the resistor R3. The working voltage signal is input into the operational amplifier of the control portion 150 for comparison with a reference threshold, so as to implement over-current protection of the APD; moreover, the working voltage signal is fed back to the MCU controller of the processing portion, and the MCU controller enables the working of the DAC chip so that the DC-DC booster chip outputs a voltage VOUT.

It is assumed that the DAC connects a voltage signal $V_{DAC}$ to the DC-DC booster chip via a resistor having a resistance value R, and that an output of the booster chip is sequentially connected to resistors R1 and R2 and then to ground as shown in FIG. 2. R1 and R2 may be present such that the DC-DC booster chip in a circuit can still work normally in the absence of a feedback signal. If a voltage between R1 and R2 is input, as a feedback voltage $V_{FB}$, into a feedback pin of the DC-DC booster chip, the output voltage VOUT of the DC-DC booster chip may satisfy the following expression:

$$VOUT = (V_{FB}-V_{DAC})\ R1/R + V_{FB}\ (1 + R1/R2)$$

Additionally, when there is no DAC input, VOUT satisfies the following expression:

$$VOUT = V_{FB}\ (1 + R1/R2).$$

By changing variables in the above expressions as needed, even if there are inherent manufacturing differences between the multiple electronic devices (e.g., the APDs), the electronic devices may be supplied with power that enables the electronic devices to work in a desired state.

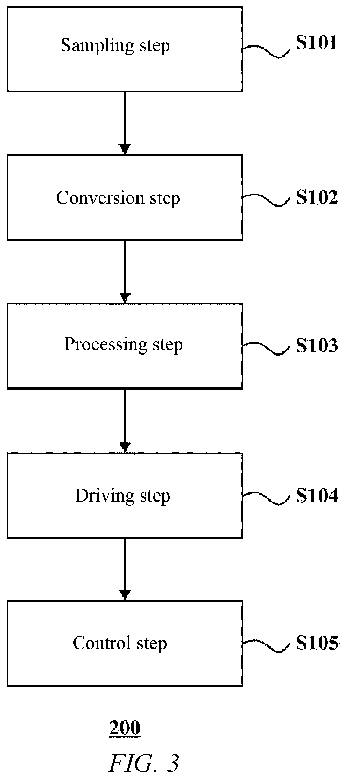

Referring now to FIG. 3, FIG. 3 is a schematic flowchart of a control method 200 for an electronic device according to an embodiment of the invention.

The control method 200 for an electronic device may include a sampling step S101: obtaining working data of the electronic device, such as working voltage data and working current data. The electronic device may be positioned on a transport means or a mobile device, such as various types of vehicles, carriers, and intelligent robots. In an embodiment where the current data is sampled, a mirror current circuit may be used for sampling. In an embodiment where the voltage data is sampled, a sampling resistor may be used for sampling.

The method 200 may further include a processing step S103: generating, based on the working data, a control signal for controlling the electronic device, and including a digital-to-analog conversion sub-step.

Incorporating the digital-to-analog conversion sub-step into the processing step S103 makes it possible to control a DAC to output an analog linear voltage, and to further make the range of an output physical quantity wider, accuracy higher, and an adjusting speed higher in subsequent steps, thereby facilitating a test on a working voltage of each electronic device and improving working efficiency, so as to position the working state of the electronic devices closer to a desired optimal point.

The method 200 may include a driving step S104: outputting, based on the control signal, power for driving the electronic device, such as a voltage and a current.

The method 200 may further include a conversion step S102: converting the working data from a current form to a voltage form. In some scenarios, it is more advantageous to convert current data into voltage data. For example, when the working current of the electronic device is small, direct use of sampled current data for subsequent processing such as feedback, comparison, addition, and subtraction may easily lead to a large relative error, which reduces the overall accuracy of a circuit. In this case, the voltage data having a reasonable value may be obtained by means of conversion of the current data using an element such as a resistor, thereby facilitating subsequent operations. A value of the resistor used for the conversion step may be adjusted as appropriate, so that the generated sampling voltage is within a desired range.

The method 200 may further include a control step S105: controlling the state of the electronic device based on the working data. The state of the electronic device may include a working state and a stop state, such as a state of not being connected to an active power source or a state of being separate from the overall circuit. The control step S105 may further include: comparing a working value represented by the working data with a reference threshold represented by reference data, and making the electronic device in a stop state when the working value exceeds the reference threshold, or making the electronic device in a working state when the working value does not exceed the reference threshold. The control step S105 may further include performing an on/off sub-step using an MOSFET.

For example, the control step S 105 may implement a comparison sub-step by using an element such as an operational amplifier. The step includes inputting the working data (e.g., representing the value of a sampled working voltage) from a first input terminal of the operational amplifier, and inputting the reference data (e.g., representing the reference threshold) from a second input terminal of the operational amplifier. The reference threshold may be set as needed. For example, the reference threshold may be a product of a maximum current value of when the device may work normally and a resistance value of the resistor used for the conversion step S 102. For example, the reference threshold may further be set slightly less than the above product, thereby leaving a certain safety margin for protecting the device against damage. In an embodiment, the first input terminal is an inverting input terminal, and the second input terminal is a non-inverting input terminal. Therefore, a low level is output in the comparison sub-step when the value of the sampled working voltage is greater than the reference threshold, and a high level is output in the comparison sub-step when the value of the sampled working voltage is less than the reference threshold.

It should be noted that blocks in a flowchart may be performed in an exchanged order or repeatedly, or may be omitted as required. For example, while in FIG. 3, the control step S105 follows the driving step S104, the control step S105 may also occur prior to the driving step S104 as appropriate. For example, the conversion step S102 may be omitted on the premise that the technical effects of the invention can be achieved, and the technical problems of the invention can be solved.

Over-current or over-voltage protection of the electronic device may be implemented by using the method as described above, and relatively accurate control of the power for driving the electronic device may be implemented by incorporating the digital-to-analog conversion sub-step into the processing step S103.

According to still another aspect of the invention, there is provided a computer-readable storage medium having stored thereon program instructions executable by a processor, where when the program instructions are executed by the processor, the control method for an electronic device according to any embodiment of an aspect of the invention is performed.

According to yet another aspect of the invention, there is provided a mobile equipment, which includes the control apparatus for an electronic device according to any embodiment of an aspect of the invention. The mobile equipment may be, for example, a transport means or a mobile device, including, but not limited to, various vehicles, carriers, intelligent robots, etc.

The foregoing disclosure is not intended to limit the disclosure to specific forms or particular application fields that are disclosed. Therefore, it is contemplated that in view of the disclosure, various alternative embodiments and/or modifications, whether clearly described or implied in this specification, of the disclosure are possible. When the embodiments of the disclosure are described as such, those of ordinary skill in the art would appreciate that changes may be made in forms and details without departing from the scope of the disclosure. Therefore, the disclosure is subject only to the claims.

**Claims**

1. A control apparatus for an electronic device, the apparatus comprising:

   a sampling portion configured to obtain working data of the electronic device;
   a processing portion comprising a digital-to-analog conversion unit and configured to generate, based on the working data, a control signal for controlling the electronic device; and
   a driving portion configured to output, based on the control signal, power for driving the electronic device.

2. The apparatus according to claim 1, further comprising a conversion portion configured to convert the working data from a current form to a voltage form.

3. The apparatus according to claim 1 or 2, further comprising a control portion configured to control the state of the electronic device based on the working data.

4. The apparatus according to claim 3, wherein the control portion is further configured to: compare a working value represented by the working data with a reference threshold represented by reference data, and

   make the electronic device in a stop state when the working value exceeds the reference threshold; or
   make the electronic device in a working state when the working value does not exceed the reference threshold.

5. The apparatus according to claim 3 or 4, wherein the control portion further comprises an on-off unit, which is used for controlling on/off of a path on which the power is transmitted to the electronic device.

6. The apparatus according to any one of claims 1 to 5, wherein the electronic device is positioned on a transport means or a mobile device.

7. A control method for an electronic device, the method comprising:

   a sampling step: obtaining working data of the electronic device;
   a processing step: generating, based on the working data, a control signal for controlling the electronic device, and comprising a digital-to-analog conversion sub-step; and
   a driving step: outputting, based on the control signal, power for driving the electronic device.

8. The method according to claim 7, further comprising a conversion step: converting the working data from a current form to a voltage form.

**9.** The method according to claim 7 or 8, further comprising a control step: controlling the state of the electronic device based on the working data.

**10.** The method according to claim 9, wherein the control step further comprises:

comparing a working value represented by the working data with a reference threshold represented by reference data, and
making the electronic device in a stop state when the working value exceeds the reference threshold; or
making the electronic device in a working state when the working value does not exceed the reference threshold.

**11.** The method according to claim 9 or 10, wherein the control step further comprises performing an on/off sub-step using an on-off unit, the on/off sub-step being used for controlling on/off of a path on which the power is transmitted to the electronic device.

**12.** The method according to any one of claims 7 to 11, wherein the electronic device is positioned on a transport means or a mobile device.

**13.** A computer-readable storage medium having stored thereon program instructions executable by a processor, wherein when the program instructions are executed by the processor, a control method for an electronic device is implemented, preferably the method according to any one of claims 7 to 12, the control method comprising:

a sampling step: obtaining working data of the electronic device;
a processing step: generating, based on the working data, a control signal for controlling the electronic device, and comprising a digital-to-analog conversion sub-step; and
a driving step: outputting, based on the control signal, power for driving the electronic device.

| Processing portion **120** | Driving portion **130** | Sampling portion **110** |

| Conversion portion **140** | Control portion **150** |
| | Comparison unit **152** | On-off unit **154** |

**100**

*FIG. 1*

*FIG. 2*

**200**

*FIG. 3*

Europäisches
Patentamt
European
Patent Office
Office européen
des brevets

# EUROPEAN SEARCH REPORT

Application Number

EP 22 16 5030

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 941 205 A (OMRON SHANGHAI CO LTD) 31 March 2020 (2020-03-31) * paragraph [0061] – paragraph [0091]; figures 4-5 * | 1-13 | INV. G05F1/00 |
| A | US 2021/190907 A1 (SAHARA TOORU [JP]) 24 June 2021 (2021-06-24) * paragraph [0042] – paragraph [0055]; figure 2 * | 1-13 | |
| A | KR 2005 0007720 A (SAMSUNG ELECTRONICS CO LTD) 21 January 2005 (2005-01-21) * the whole document * | 1-13 | |

TECHNICAL FIELDS
SEARCHED      (IPC)

G05F
G05G
G08C
H04N
A61F
A61B
G16H
B60K
G06F
H02J
B60W
G01S

The present search report has been drawn up for all claims

| Place of search | Date of completion of the search | Examiner |
|---|---|---|
| Munich | 6 September 2022 | Hernandez Serna, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 5030

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2022

| Patent document cited in search report | | Publication date | Patent family member(s) | | Publication date |
|---|---|---|---|---|---|
| CN 110941205 | A | 31-03-2020 | NONE | | |
| US 2021190907 | A1 | 24-06-2021 | CN | 112654888 A | 13-04-2021 |
| | | | EP | 3848723 A1 | 14-07-2021 |
| | | | JP | 6746017 B2 | 26-08-2020 |
| | | | JP | 2020144128 A | 10-09-2020 |
| | | | JP | WO2020050278 A1 | 10-09-2020 |
| | | | US | 2021190907 A1 | 24-06-2021 |
| | | | WO | 2020050278 A1 | 12-03-2020 |
| KR 20050007720 | A | 21-01-2005 | NONE | | |

EPO FORM P0459

For more details about this annex : see Official Journal of the European Patent Office, No. 12/82